# EUROPEAN PATENT APPLICATION

(11) **EP 4 761 067 A1**
(43) Date of publication of application: **17.06.2026**
(21) Application number: 25220705.5
(22) Date of filing: 04.12.2025
(51) Int. Cl.: H02K 1/20, H02K 3/24, H02K 9/197

(54) **STATORE DI MACCHINA ELETTRICA**

(30) Priority: 10.12.2024 IT 202400028041
(71) Applicant: FERRARI S.p.A., 41100 Modena (IT)
(72) Inventor: CRIVELLARO, Denis, 41100 MODENA (IT); DELLA FORNACE, Enrico, 41100 MODENA (IT); FERRARA, Davide, 41100 MODENA (IT); GAMBA, Matteo, 41100 MODENA (IT); PASQUALE, Stefano, 41100 MODENA (IT)
(74) Representative: Studio Torta S.p.A.

(57) **Abstract**

An electric machine stator (2) has a casing (4) defining an internal cavity (5) housing a core (6) made of ferromagnetic material, arranged axially between two chambers (23,27) communicating respectively with an inlet conduit (25) and with an outlet conduit (27), to receive and discharge a heat exchange liquid; the core (6) consists of a plurality of teeth (7) arranged about a longitudinal axis (A) and circumferentially defining between each other a plurality of slots (8) engaged by coils (18) made of electrically conductive material, wound around the teeth (7); the two chambers (23,27) in the stator (2) communicate with each other through the slots (8) and through a plurality of channels (30) formed in the teeth (7); the stator (2) also has an adjustment device (40) configurable to achieve a first configuration, in which it allows passage of the heat exchange liquid in the channels (30), and a second configuration, in which it prevents passage of the heat exchange liquid in the channels (30).

## Description

### Cross-reference to related applications

This patent application claims priority from Italian patent application no. 102024000028041 filed on December 10, 2024, the entire disclosure of which is incorporated herein by reference.

### Technical field

The present invention relates to an electric machine stator, which is cooled by a heat exchange liquid. This liquid, in particular, flows from an inlet towards an outlet, arranged at opposite axial ends of the stator.

### Background

As is known, an electric machine stator has a core, typically made of iron, comprising a plurality of teeth that delimit between them, in a circumferential direction, a series of stator slots, parallel to each other and to the axis of the stator. The teeth are wound by coils, which are made of copper and are electrically isolated from each other and from the iron of the core. In particular, the copper wires of the coils, inside the slots of the core, extend parallel to the axis of the stator.

In some solutions, the slots of the stator are cooled by a heat exchange liquid, which removes heat from the copper wires. In particular, the liquid flows from one axial end to the other in the slots of the stator, in the natural gaps present between the wires. Simultaneously, the stator is radially delimited towards the inside by a bulkhead coupled in a fluid-tight manner to the core to prevent leakages of the heat exchange liquid.

In other prior art solutions, the heat exchange liquid also flows through additional channels, which are formed through the teeth of the core, parallel to the axis of the stator.

There is the need to improve the cooling system of the type described above; in particular, there is the need to adjust the flow of the heat exchange liquid inside the teeth of the stator as a function of the operating conditions to which the electric machine is subjected (for example, as a function of the torque and/or power that is currently delivered by the electric machine, in the case of a motor, or absorbed by the electric machine, in the case of a generator; and/or as a function of corresponding electrical current values; and/or as a function of a temperature detected in the electric machine and/or in the electrical circuits connected thereto; etc.), for example to optimize management of the heat exchange liquid and/or to optimize the operating conditions of the electric machine.

### Summary

The aim of the present invention is to provide an electric machine stator that allows the aforesaid requirements to be met in a simple and economical manner.

According to the present invention, there is provided an electric machine stator as defined in claim 1.

Preferred embodiments of the present invention are defined in the accompanying dependent claims.

### Brief description of the drawings

The invention will now be described with reference to the accompanying drawings, which illustrate a non-limiting example of embodiment, and wherein:
- Fig. 1 is a perspective view of a preferred embodiment of the electric machine stator according to the present invention;
- Fig. 2 shows the stator of Fig. 1 with parts removed for clarity and from a different point of view;
- Fig. 3 shows, in an enlarged scale, the stator of Fig. 2, with parts cross-sectioned according to a diametrical section plane on which an axis of said stator lies;
- Fig. 4 is an enlargement of a detail of Fig. 3, indicated by the reference IV;
- Fig. 5 is similar to Fig. 4 and shows a component of the stator in a different operating position; and
- Fig. 6 shows the stator of Fig. 2, cross-sectioned along a transverse section plane, orthogonal to the axis of the stator.

### Description of preferred embodiments

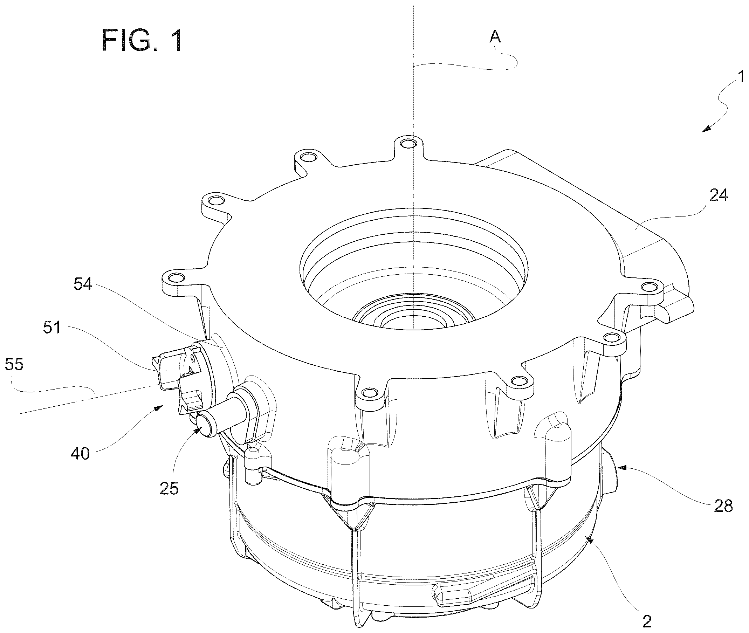

In Fig. 1, the reference number 1 indicates, as a whole, an electric machine, partially illustrated, for example an electric motor suitable for motor vehicle traction. The electric machine 1 comprises a rotor shaft (not illustrated) extending along, and rotating about, a longitudinal axis A; and a stator 2, coaxial to said rotor shaft. Optionally, the stator 2 can also be used in a generator or in a motor generator, and/or in applications other than vehicles.

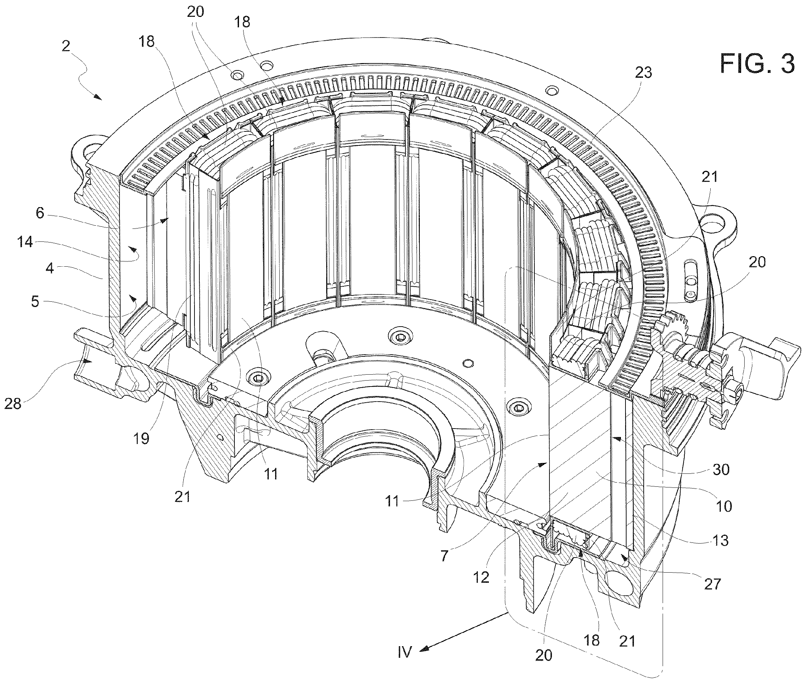

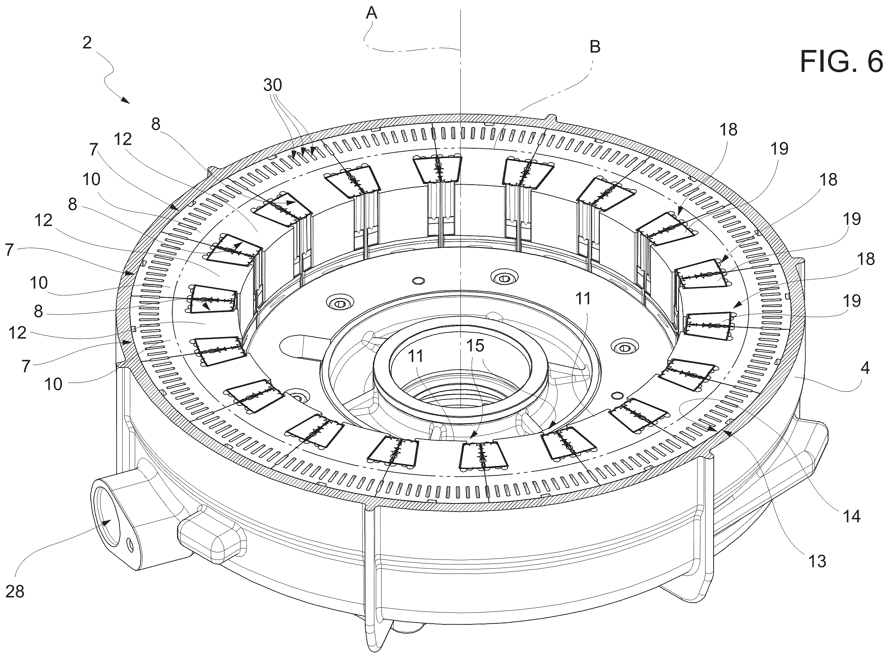

With reference to Fig. 3, the stator 2 comprises an outer casing 4, radially defining towards the inside a cavity 5, and a core 6, made of ferromagnetic material, for example iron, arranged in the cavity 5. With reference to Fig. 6, the core 6 consists of a plurality of teeth 7, which define respective magnetic poles and are arranged side by side, with continuity, along a circumferential direction B about the axis A and delimit between each other, along this direction B, a series of slots 8.

Each slot 8 consists of two semi-slots, respectively formed on two teeth 7 adjacent to each other. The slots 8 and the teeth 7 are parallel to the axis A and have respective cross sections with a constant area and shape along said axis A.

Each tooth 7 has a cross section having a symmetrical shape with respect to a median radial plane on which the axis A lies, and comprises: a radially external portion 10, a radially internal portion 11, and an intermediate portion 12, which radially connects the portions 10 and 11 to each other and is not as wide as the portions 10 and 11 along the direction B. In other words, the cross section of each tooth 7 is substantially I-shaped.

In particular, along the direction B, the portions 10 are placed next to each other to form a continuous ring along the direction B. More in particular, the ring formed by the portions 10 has an external surface 13 that is cylindrical and is coupled to a corresponding internal cylindrical surface 14 of the casing 4.

More in particular, the portions 11 are spaced from each other along the direction B by slits 15 parallel to the axis A, and extending radially at respective slots 8.

The stator 2 further comprises a plurality of coils 18, made of an electrically conductive material, for example copper, wound respectively around the portions 12 of the teeth 7, and electrically isolated from each other and with respect to the core 6 by sheets of insulating material, known and not described in detail.

In particular, with reference to Fig. 3, each coil 18 comprises wire portions 19, substantially rectilinear and extending in the slots 8 parallel to the axis A, and wire portions 20, curved around two caps 21 (partially illustrated) that are fixed to opposite axial ends of the corresponding tooth 7.

Preferably, the coils 18 are connected in a known way, not illustrated, to form a three-phase winding.

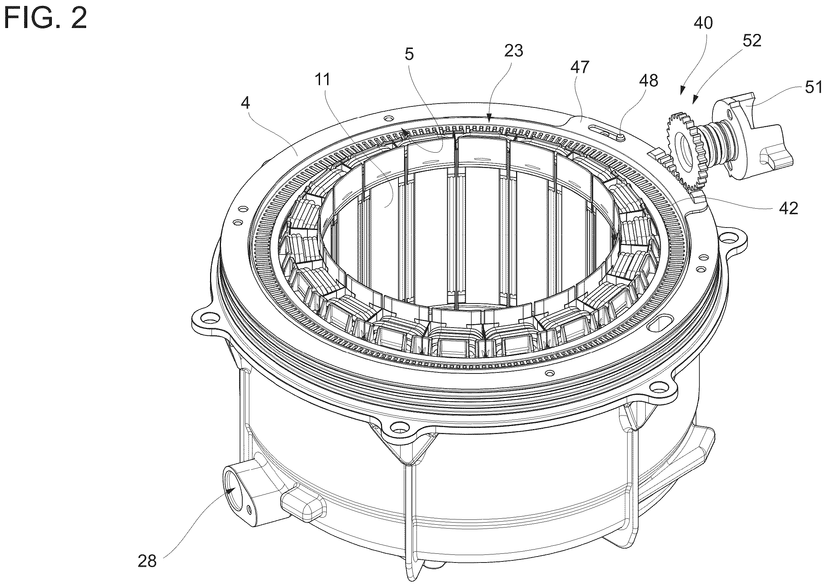

For example, the coils 18 are connected to busbars, not illustrated, arranged in an annular chamber 23 (only one side of which is illustrated in Figs. 2 to 5) at an axial end of the cavity 5. In turn, the busbars have respective electrical contacts, defining the terminals of the aforesaid three-phase winding and are connected to an electrical connector 24, partially visible in Fig. 1, provided outside the casing 4 to connect the electric machine 1 to an electrical network, not illustrated.

The chamber 23 communicates with the outside through an inlet conduit 25, used for feeding a heat exchange liquid, for example an oil, towards the inside of the stator 2. Preferably, the stator 2 comprises a cylindrical wall, not illustrated, radially delimiting the cavity 5 towards the inside and coupled in a fluid-tight manner to the portions 11 of the teeth 7 to ensure isolation of the cavity 5, and in particular of the slots 8, radially towards the inside.

Again with reference to Fig. 3, at the opposite axial end with respect to the chamber 23, the cavity 5 terminates with an annular chamber 27 communicating with the outside through an outlet conduit 28 to allow the heat exchange liquid to flow outwards. Therefore, the conduits 25 and 28 are arranged at opposite axial ends of the stator 2 and, in use, are connected to a hydraulic system configured to pump and condition the heat exchange liquid.

In use, the heat exchange liquid flows from the conduit 25 into the chamber 23, and from there axially towards the chamber 27 along the slots 8, into the spaces available between the wire portions 19. According to an aspect of the present invention, in use the heat exchange liquid can flow from the chamber 23 towards the chamber 27 also along a plurality of channels 30, which are visible in Fig. 6, extend through the core 6, in a manner passing from one axial end to the other, and are spaced from one another.

Preferably, the channels 30 are parallel to each other; more preferably, they are rectilinear and parallel to the axis A.

Preferably, the channels 30 have the same radial distance from the axis A and are spaced from one another along the direction B; therefore, in practice, they form a ring of passages around the axis A; more preferably, the channels 30 are equally spaced from one another around the axis A, i.e., along the direction B.

Preferably, the channels 30 are formed in the portions 10 of the teeth 7. More preferably, the channels 30 are formed solely in the portions 10 of the teeth 7, while the portions 11 and 12 are solid portions, i.e., without internal channels. Even more preferably, the channels 30 are formed inside the portions 10, i.e., have a closed perimeter defined solely by the portions 10; according to a variant, not illustrated, at least some of the channels 30 can be formed at the cylindrical surfaces 13 and 14, and hence be defined partly by the portions 10 of the teeth 7 and partly by the casing 4.

Preferably, the cross section of each channel 30 (obtained through section planes orthogonal to the axis A) is constant in shape and dimensions along the axis A. More preferably, the channels 30 all have the same cross section, in shape and dimensions. For example, it is a cross section of rectangular shape, optionally with rounded edges. In particular, this rectangular shape has a radial dimension that is longer than the dimension along the direction B.

According to variants, not illustrated, the channels 30 have a cross section of different shape, for example circular or oval.

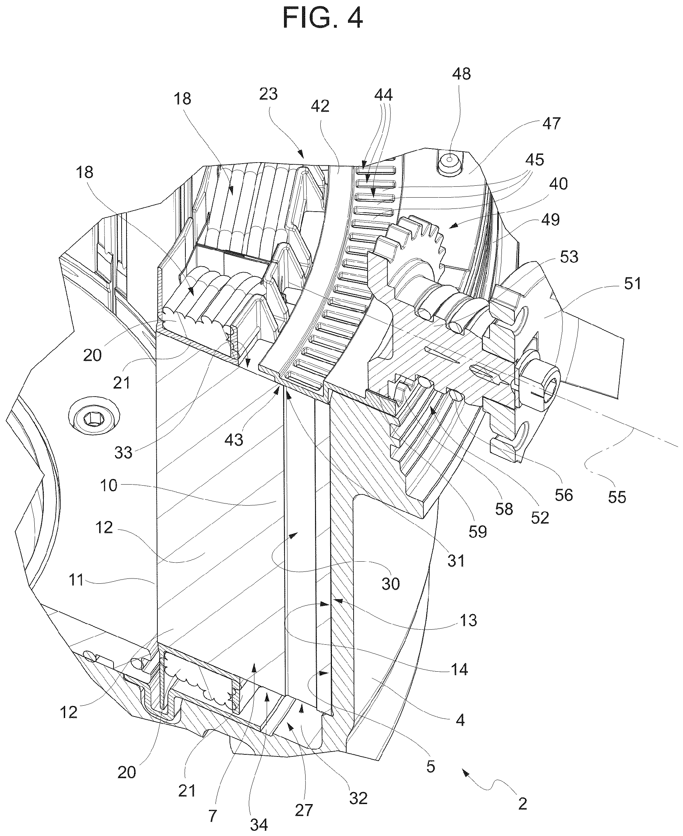

With reference to Fig. 4, each channel 30 has an inlet port 31 and an outlet port 32, arranged respectively at two opposite faces 33 and 34 axially delimiting the teeth 7. In particular, the caps 21 are coupled abutting on radially internal areas of the faces 33 and 34, while the ports 31 and 32 are formed in radially external areas of the faces 33 and 34.

Moreover, according to the invention, the stator 2 comprises an adjustment device 40 that can be operated, manually or through an actuator (not illustrated), to achieve a first and a second operating configuration: the first configuration allows passage of the heat exchange liquid along the channels 30, while the second configuration prevents passage of the heat exchange liquid in the channels 30, for example by closing the ports 31 or by closing the ports 32. Therefore, in the first configuration the heat exchange liquid removes heat both from the coils 18 and from the inside of the teeth 7; instead, in the second configuration the heat exchange liquid removes heat mainly from the coils 18, while the teeth 7 are only marginally cooled, i.e., are cooled only along the two faces 33 and 34.

In the specific illustrated example, the adjustment device 40 is configured to adjust opening of the ports 31 at the face 33. In particular, this face is flat and is orthogonal to the axis A, while the adjustment device 40 comprises a ring 42, which is coaxial to the core 6 and has a flat face 43 arranged abutting against the face 31 to ensure the fluid tightness between the ring 42 and the core 6. The ring 42 has a plurality of through holes 44 in axial direction, exiting on the face 43, spaced from each other by solid portions 45 of the ring 42, and arranged with a relative positioning, or pattern, identical to the one of the ports 31 on the face 33 of the teeth 7.

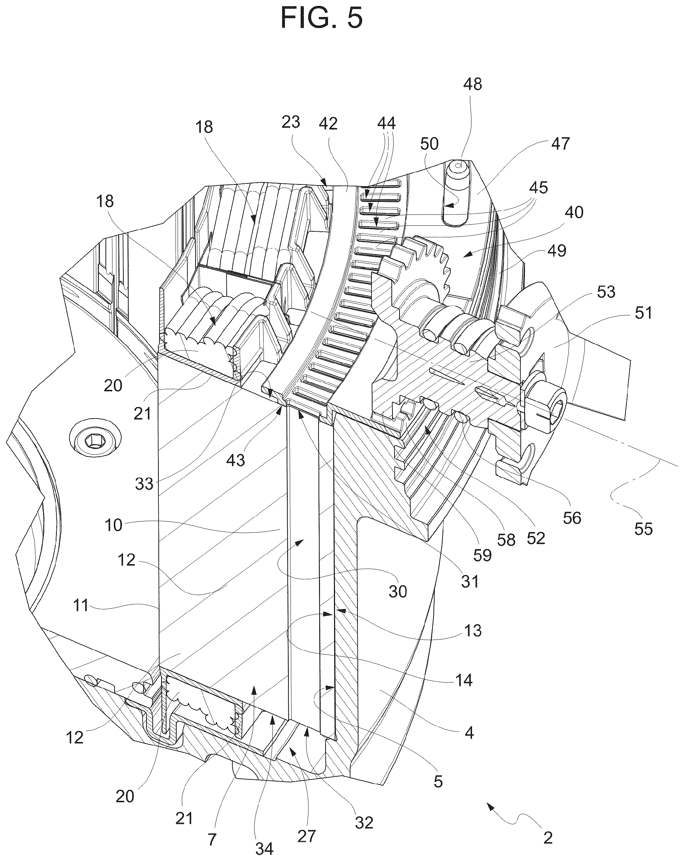

The ring 42 is coupled to the core 6 and/or to the casing 4 so as to be held in axial position fixed against the face 33 and, at the same time, be able to rotate about the axis A: in a first angular configuration (Fig. 5), corresponding to the first configuration indicated above, the holes 44 are aligned respectively with the ports 31 and, hence, they allow passage of the heat exchange liquid in the channels 30; in a second angular position (Fig. 4) corresponding to the second configuration indicated above, the solid portions 45 are aligned with the ports 31 and close them, to prevent passage of the heat exchange liquid.

In practice, in view of its function, the ring 42 defines a shutter or a valve, arranged between the chamber 23 and the ports 31.

The ring 42 supports, in a fixed position, a sector 47, protruding with respect to the ring 42 and is coupled to a stop element 48, arranged in a fixed position with respect to the core 6 and to the casing 4 so as to stop the rotation of the ring 42 in two end positions opposite to each other and corresponding, respectively, to the first and second angular position indicated above.

Preferably, the sector 47 protrudes radially outwards from the ring 42 and is coupled to a portion 49 of the casing 4 that supports, in a fixed position, the stop element 48. More preferably, the sector 47 has an arc-shaped eyelet 50 (Fig. 5) engaged in a sliding manner by the stop element 48; the latter is, for example, defined by a pin parallel to the axis A.

The adjustment device 40 further comprises a control member 51, which is arranged outside of the casing 4, is coupled to the ring 42 by a transmission 52, and is supported by said casing 4 in such a way as to ensure fluid tightness of the cavity 5.

As mentioned above, the control member 51 is movable, in response to a manual action or in response to the action of an actuator, not illustrated, to drive the ring 42 between the two configurations described above, by the transmission 52.

Preferably, the transmission 52 comprises a shaft 53 extending through a side wall 54 (Fig. 1) of the casing 4 along an axis 55, which is radial with respect to the axis A. The shaft 53 is coupled to the wall 54 so as to be able to rotate about the axis 55, and through the interposition of one or more O-rings 56 (Figs. 4 and 5) fitted around said shaft 53. In particular, the control member 51 is fixed to an axial end of the shaft 53.

Again with reference to Figs. 4 and 5, the transmission 52 preferably further comprises a rack 58, extending about the axis A and in a fixed position with respect to the ring 42, and a toothed wheel 59, which is arranged in the cavity 5 (in particular in the chamber 23) in a position that is coaxial and fixed at an end of the shaft 53 opposite to the control member 51. For example, the rack 58 is arranged in a fixed position on the sector 47. The toothed wheel 59 meshes with the rack 58 so as to rotate the ring 42 about the axis A when the shaft 53 rotates about its axis 55 in response to operation of the control member 51.

Preferably, the ring 42 can be rotated by operating the control member 51 to be positioned in any of the intermediate positions between the two end positions described above, so as to throttle the flow rate of heat exchange liquid that flows in the channels 30 through the teeth 7.

In particular, the manual operation mentioned above for the control member 51 is used in cases in which an initial setting is sufficient to calibrate the value of this flow rate, for example at the start of the life cycle of the electric machine 1 and/or during scheduled routine maintenance operations, for example through bench tests carried out on the electric machine 1, without the need to subsequently adjust the flow rate during effective use of said electric machine 1. Instead, with an operation of the control member 51 by actuator, it is possible to adjust the flow rate also during actual operation, preferably in response to detected or estimated parameters (temperature, electric current, power or torque required by the electric machine 1 instant by instant, etc.) that are processed by a electronic control unit (not illustrated) to obtain real time optimization of the cooling conditions inside the stator 2.

Therefore, from the above it is evident how the adjustment device 40 is particularly advantageous, as it allows the level of cooling of the teeth 7 to be effectively adjusted, varying the flow rate of heat exchange liquid flowing in the channels 30.

Moreover, in light of the features described above, the adjustment device 40 is relatively simple and compact. Further, the adjustment device 40 has construction features that ensure fluid tightness of the cavity 5 in a relatively simple way.

Finally, from the above it is also evident that modifications and variations can be made to the stator 2 described above with reference to the accompanying drawings, without departing from the scope of protection defined by the appended claims.

In particular, the control member 51 and/or the transmission 52 could differ from what is indicated above, for example could include a lever system.

Moreover, as mentioned above, the ring 42 could be arranged on the face 34 to open and close the ports 32, instead of the ports 31.

## Claims

1. Electric machine stator (2) extending along a longitudinal axis (A) and comprising
- a casing (4) defining an internal cavity (5);
- a core (6) made of ferromagnetic material, arranged in said cavity (5) in a coaxial position with respect to said casing (4) and in an intermediate axial position between two chambers (23,27), and defined by a plurality of teeth (7), arranged about said longitudinal axis (A) and defining, between each other, a plurality of slots (8) along a circumferential direction (B);
- a plurality of coils (18) made of electrically conductive material, wound around said teeth (7);
- an inlet conduit (25) and an outlet conduit (27) communicating respectively with said chambers (23,27) for feeding and respectively discharging a heat exchange liquid;
wherein said chambers (23, 27) communicate with each other through said slots (8) and through a plurality of channels (30), which are distinct from said slots (8), are formed in said teeth (7) and have respective inlet ports (31) and respective outlet ports (32) on axial faces (33, 34) of said teeth (7), opposite to each other;
**characterized by** further comprising an adjustment device (40) configurable to achieve a first configuration, in which it allows passage of the heat exchange liquid in said channels (30), and a second configuration, in which it prevents passage of the heat exchange liquid in said channels (30).

2. The electric machine stator according to claim 1, wherein said adjustment device (40) is configured to open and close said inlet ports (31) or said outlet ports (32).

3. The electric machine stator according to claim 2, wherein said adjustment device (40) is configured to open and close said inlet ports (31).

4. The electric machine stator according to claim 2 or 3, wherein said adjustment device (40) comprises a ring (42), which is coaxial to said core (6), has a plurality of through holes (44) with an arrangement identical to the one of the corresponding ports (31,32), is axially fixed, and is angularly rotatable so as to define a shutter or valve, between a first and a second position corresponding, respectively, to said first and second configurations.

5. The electric machine stator according to claim 4, wherein said adjustment device (40) further comprises a transmission (52) and a control member (51), which is arranged outside said casing (4), is coupled to said ring (42) by said transmission (52), is supported by said casing (4) in such a way as to ensure fluid tightness of said cavity (5), and is movable to drive said ring (42) between said first and second positions.

6. The electric machine stator according to claim 5, wherein said transmission (52) comprises a shaft (53) extending through a side wall (54) of said casing (4) along a radial axis (55) and coupled to said side wall (54) in a fluid-tight manner and so as to be able to rotate about said radial axis (55).

7. The electric machine stator according to claim 6, wherein said transmission (52) further comprises:
- a rack (58), extending about said longitudinal axis (A) and fixed with respect to said ring (42), and
- a toothed wheel (59), which is arranged in said cavity (5) in a position that is coaxial and fixed on an end of said shaft (53).

8. The electric machine stator according to claim 7, wherein said adjustment device (40) comprises a sector (47) protruding in a fixed position from said ring (42), and wherein said rack (58) is arranged in a fixed position on said sector (47).

9. The electric machine stator according to any one of claims 4 to 8, wherein said adjustment device (40) further comprises a stop element (48), arranged in a fixed position with respect to said core (6) and casing (4), and configured so as to stop the rotation of said ring (42) in two end positions, opposite to each other and corresponding, respectively, to said first and second positions.

10. The electric machine stator according to claim 9, wherein said adjustment device (40) further comprises a sector (47) protruding in a fixed position from said ring (42) and having an eyelet engaged in a sliding manner by said stop element (48).
